# EUROPÄISCHE PATENTSCHRIFT

(11) **EP 1 261 437 B1**
(45) Veröffentlichungstag und Bekanntmachung des Hinweises auf die Patenterteilung: **11.05.2005**
(21) Anmeldenummer: 01931489.7
(22) Anmeldetag: 01.03.2001
(51) Int. Cl.: B06B 1/06, G01F 23/296

(54) **VORRICHTUNG ZUR FESTSTELLUNG UND/ODER ÜBERWACHUNG EINES VORBESTIMMTEN FÜLLSTANDES IN EINEM BEHÄLTER**
DEVICE FOR DETERMINING AND/OR MONITORING A PREDETERMINED LEVEL IN A CONTAINER
DISPOSITIF POUR FIXER ET/OU SURVEILLER UN NIVEAU DE REMPLISSAGE PREDETERMINE DANS UN CONTENANT

(30) Priorität: 08.03.2000 EP 00104945; 17.04.2000 US 197546 P
(43) Veröffentlichungstag der Anmeldung: 04.12.2002
(73) Patentinhaber: Endress + Hauser GmbH + Co. KG, 79689 Maulburg (DE)
(72) Erfinder: KUHNY, Jutta, 79541 Lörrach (DE); LOPATIN, Sergej, 79539 Lörrach (DE); DREYER, Volker, 79541 Lörrach (DE)
(74) Vertreter: Andres, Angelika
(86) Internationale Anmeldenummer: PCT/EP2001/002299
(87) Internationale Veröffentlichungsnummer: WO 2001/066269

(56) Entgegenhaltungen:
- DE-A- 4 118 793
- DE-A- 19 814 669
- US-A- 3 495 102
- US-A- 4 072 871

## Beschreibung

Die Erfindung betrifft eine Vorrichtung zur Feststellung und/oder Überwachung eines vorbestimmten Füllstandes in einem Behälter, die ein auf der Höhe des vorbestimmten Füllstandes angebrachtes mechanisches Schwingungsgebilde mit einem endseitig von einer Membran verschlossenen Gehäuse aufweist, das durch einen elektromechanischen Wandler zu Schwingungen anregt wird. Die Schwingungen des mechanischen Schwingungsgebildes werden aufgenommen und in elektrische Signale umwandelt, die einer weiteren Verarbeitung und/oder Auswertung zugänglich gemacht sind. Aus den elektrischen Signalen kann z.B. eine Frequenz und/oder eine Amplitude der Schwingung bestimmt werden. Frequenz und/oder Amplitude geben Aufschluß darüber, ob das mechanische Schwingungsgebilde von einem Füllgut bedeckt ist oder nicht.

Derartige Füllstandsgrenzschalter werden in vielen Industriezweigen, insb. in der Chemie und in der Lebensmittelindustrie eingesetzt. Sie dienen zur Grenzstandsdetektion und werden z.B. als Überfüllsicherung oder als Pumpenleerlaufschutz verwendet.

Je nach Anwendung werden an diese Vorrichtungen besondere Anforderungen gestellt. So muß z.B. wenn der vorbestimmte Füllstand sehr weit entfernt von einer Montageöffnung für ein entsprechendes Meßgerät liegt eine nachfolgend als Rohrverlängerung bezeichnete Verlängerung des Gehäuses vorgesehen sein, durch die das mechanische Schwingungsgebilde am Ort des vorbestimmten Füllstandes plazierbar ist und durch die hindurch der elektrische Anschluß des elektromechanischen Wandlers erfolgt.

Bei einigen Anwendungen ist bevorzugt eine Beschichtung der Vorrichtung, z.B. mit Emaille oder einem Kunststoff wie z.B. Polyflouramid (PFA) oder Halar (ECTFE), anzubringen. Dabei muß die Vorrichtung natürlich den bei der Aufbringung der Beschichtung auftretenden unter Umständen sehr hohen Temperaturen stand halten können.

Auch gibt es Anwendungen, bei denen sehr hohe Temperaturen und/oder Drücke auf die Vorrichtung einwirken können.

In der DE-A 41 18 793 ist eine Vorrichtung zur Feststellung und/oder Überwachung eines vorbestimmten Füllstandes in einem Behälter beschrieben, welche Vorrichtung umfaßt:
- ein auf der Höhe des vorbestimmten Füllstandes anzubringendes mechanisches Schwingungsgebilde,
   -- mit einem topfförmigen endseitig von einer Membran verschlossenen Gehäuse, und
- in einem Stapel angeordnete piezoelektrische Elemente,
   -- die im Betrieb dazu dienen das mechanische Schwingungsgebilde in Schwingungen zu versetzten und dessen von einem momentanen Füllstand abhängigen Schwingungen aufzunehmen und einer weiteren Verarbeitung und/oder Auswertung zugänglich zu machen.

Der Wandler weist in einem Stapel angeordnete ringscheibenförmige piezoelektrische Elemente auf. An beiden Enden des Stapels ist jeweils ein Metallring angeordnet. Der membran-zugewandte Metallring liegt auf einer ringförmigen Schulter auf, die an einer äußeren in das Gehäuse hinein weisenden Ringfläche der Membran angeformt ist. In der Mitte der Membran ist eine in das Innere des Gehäuses weisende Spannschraube vorgesehen. Diese ist mit einer Isolation versehen und führt durch den Wandler hindurch. Auf dem membran-abgewandten Ende der Spannschraube ist eine Mutter aufgeschraubt. Diese liegt auf dem membran-abgewandten Metallring auf. Die Mutter ist angezogen. Die Membran ist somit vorgespannt.

In der DE-A 198 14 669 wird eine andere Vorrichtung zur Feststellung und/oder Überwachung eines vorbestimmten Füllstandes in einem Behälter beschrieben, Auch hierzu werden stapelförmig angeordnete piezoelektrische Elemente angegeben, die in einem Gehäuse durch eine Stellschraube in einem im Gehäuse angebrachten Joch gegen eine Membran verspannt. Diese Konstruktion ist recht aufwendig und erfordert eine aufwendige und sehr genaue Montage.

Es ist eine Aufgabe der Erfindung, eine Vorrichtung zur Feststellung und/oder Überwachung eines vorbestimmten Füllstands in einem Behälter anzugeben, die möglichst vielseitig einsetzbar ist.

Hierzu besteht die Erfindung in einer Vorrichtung zur Feststellung und/oder Überwachung eines vorbestimmten Füllstandes in einem Behälter, welche Vorrichtung umfaßt:
- ein auf der Höhe des vorbestimmten Füllstandes anzubringendes mechanisches Schwingungsgebilde,
   -- mit einem topfförmigen endseitig von einer Membran verschlossenen Gehäuse,
- in einem Stapel angeordnete piezoelektrische Elemente,
   -- die im Betrieb dazu dienen das mechanische Schwingungsgebilde in Schwingungen zu versetzten und dessen von einem momentanen Füllstand abhängige Schwingungen aufzunehmen und einer weiteren Verarbeitung und/oder Auswertung zugänglich zu machen, und
   -- die zwischen einem ersten und einem zweiten jeweils endseitig an den Stapel angrenzenden Stempel eingefaßt sind, und
- bei dem der Stapel entlang einer Längsachse des Gehäuses zwischen einer in das Gehäuses eingeschraubten Druckschraube und der Membran eingespannt ist.

Gemäß einer Ausgestaltung dient mindestens ein piezoelektrisches Element als Sender, an den im Betrieb ein elektrisches Sendesignal angelegt ist und der das Schwingungsgebilde zu mechanische Schwingungen anregt, und mindestens ein piezoelektrisches Element dient als Empfänger, der im Betrieb die mechanischen Schwingungen des Schwingungsgebildes aufnimmt und in elektrische Signale umwandelt.

Gemäß einer Weiterbildung ist zwischen dem Sender und dem Empfänger eine Trennscheibe angeordnet.

Gemäß einer Ausgestaltung sind die piezoelektrischen Elemente in einer Hülse angeordnet, die endseitig von dem ersten und dem zweiten Stempel abgeschlossen ist.

Gemäß einer weiteren Ausgestaltung ist der Stapel in einem Einsatz in dem Gehäuse angeordnet.

Gemäß einer Ausgestaltung ist die Druckschraube mit dem Einsatz mittels einem Schnappverschluß verbunden.

Gemäß einer Ausgestaltung weist die Druckschraube eine Ausnehmung auf, durch die Anschlußleitungen der piezoelektrischen Elemente hindurch geführt sind.

Gemäß einer Weiterbildung bilden Stapel, Einsatz und Druckschraube eine Einheit, die mittels eines an der Druckschraube eingreifenden Werkzeuges in das Gehäuse einschraubbar ist.

Gemäß einer Weiterbildung weist die Meßmembran eine der Form des ersten Stempels nachempfundene Mulde auf, in der der erste Stempel drehbar gelagert ist.

Ein Vorteil der Erfindung besteht darin, daß die Kraftübertragung von den im Stapel angeordneten piezoelektrischen Elementen direkt auf die Membran erfolgt. Hierdurch ist eine verlustarme und phasengetreue Schwingungsanregung und Schwingungsaufnahme möglich.

Zusätzlich bieten die hier verwendeten scheibenförmigen piezoelektrischen Elemente gegenüber den in dem vorgenannten Stand der Technik beschriebenen ringscheibenförmigen piezoelektrischen Elementen den Vorteil, daß bei gleicher Krafterzeugung piezoelektrische Elemente mit kleinerem Außendurchmesser eingesetzt werden können.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.
- Fig. 1: zeigt einen Längsschnitt durch eine erfindungsgemäße Vorrichtung;
- Fig. 2: zeigt einen weiteren Längsschnitt durch die Vorrichtung wobei die Schnittebene gegenüber der Schnittebene des in Fig. 1 dargestellten Längsschnitts um 90° verdreht ist;
- Fig. 3: zeigt eine Explosionsdarstellung der in dem Gehäuse des in den Figuren 1 und 2 dargestellten Ausführungsbeispiels angeordneten Bauteile;
- Fig. 4: zeigt eine Explosionsdarstellung der in Fig. 3 dargestellten Bauteile aus einem anderen Blickwinkel;
- Fig. 5: zeigt einen Längsschnitt durch einen Stapel piezoelektrischer Elemente, der zwischen endseitig daran angrenzenden Stempeln eingefaßt ist;
- Fig. 6: zeigt einen weiteren Längschnitt durch einen Stapel piezoelektrischer Elemente, der zwischen endseitig daran angrenzenden Stempeln eingefaßt ist, wobei die Schnittebene gegenüber der Schnittebene des in Fig. 5 dargestellten Längsschnitts um 90° verdreht ist;
- Fig. 7: zeigt eine sternförmige Elektrode;
- Fig. 8: zeigt eine kreisscheibenförmige Elektrode;
- Fig. 9: zeigt eine Ansicht der Hülse von Fig. 1;
- Fig. 10: zeigt eine Draufsicht auf die Hülse von Fig. 1;
- Fig. 11: zeigt eine geschnittene Ansicht des Einsatzes von Fig. 1;
- Fig. 12: zeigt eine geschnittene Ansicht des Einsatzes von Fig. 1;
- Fig. 13: zeigt eine Draufsicht auf eine membran-zugewandte Stirnfläche der Druckschraube;
- Fig. 14: zeigt einen Längsschnitt durch die Druckschraube;
- Fig. 15: zeigt eine Draufsicht auf eine membran-abgewandte Stirnfläche der Druckschraube; und
- Fig. 16: zeigt eine Ansicht der Druckschraube.

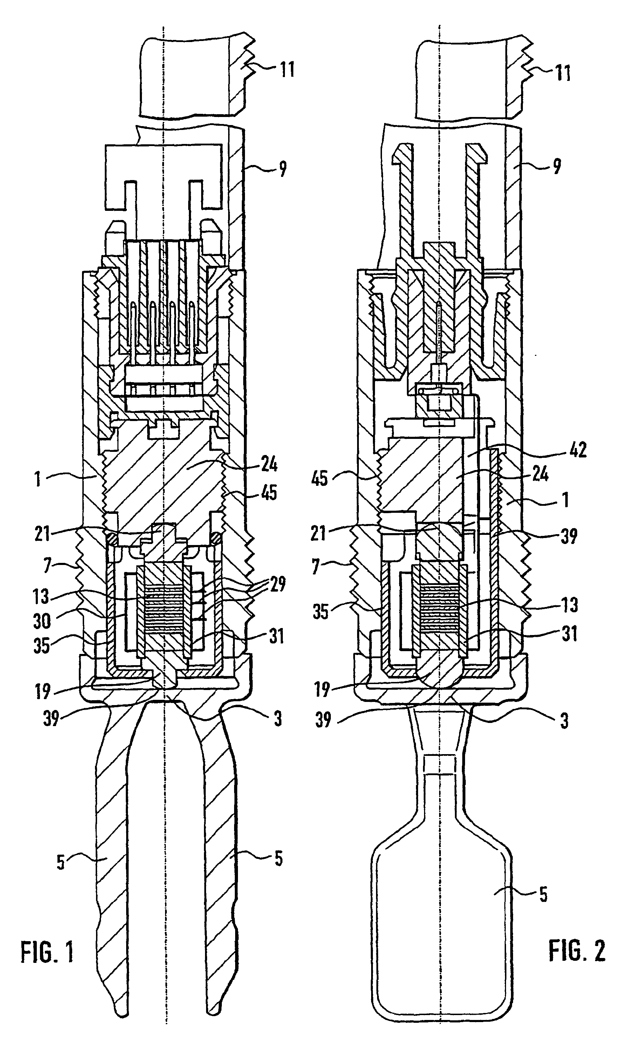

Die Figuren 1 und 2 zeigen jeweils einen Längsschnitt durch eine erfindungsgemäße Vorrichtung zur Feststellung und/oder Überwachung eines vorbestimmten Füllstandes in einem Behälter. Die in Fig. 1 gewählte Schnittebene ist gegenüber der in Fig. 1 dargestellten Schnittebene um 90° verdreht.

Die Vorrichtung weist ein im wesentlichen zylindrisches Gehäuse 1 auf, das endseitig von einer kreisscheibenförmigen Membran 3 frontbündig verschlossen ist. An der Außenseite des Gehäuses 1 sind an der Membran 3 zwei in den Behälter weisende Schwingstäbe 5 angeformt. Gehäuse 1, Membran 3 und Schwingstäbe 5 sind Bestandteile eines mechanischen Schwingungsgebildes, das durch einen im Inneren des Gehäuses 1 angeordneten elektromechanischen Wandler in Schwingungen versetzt wird. Dabei führt die Membran 3 Biegeschwingungen aus und die Schwingstäbe 5 werden in Schwingungen senkrecht zu deren Längsachse versetzt.

Die Erfindung ist jedoch nicht auf mechanische Schwingungsgebilde mit zwei Schwingstäben beschränkt; sie kann auch bei Grenzschaltern eingesetzt werden, die nur einen oder keine Schwingstäbe aufweisen. Bei den letztgenannten kommt z.B. nur die schwingende Membran mit einem in dem Behälter befindlichen Füllgut in Kontakt.

Die Vorrichtung ist auf der Höhe eines vorbestimmten Füllstandes anzubringen. Hierzu ist z.B., wie jeweils auf der linken Seite der Figuren 1 und 2 dargestellt, am Gehäuse 1 ein Außengewinde 7 vorgesehen, mittels dessen die Vorrichtung in eine entsprechende Öffnung in einem Behälter einschraubbar ist. Andere Arten der Befestigung, z.B. mittels Flanschen, sind ebenfalls einsetzbar. Für den Fall, daß der vorbestimmte Füllstand sich in einiger Entfernung von einer Montagevorrichtung für Meßgeräte befindet ist z.B. eine jeweils in der rechten Hälfte der Figuren 1 und 2 dargestellte Rohrverlängerung 9 vorzusehen. Eine besonders häufig auftretende Anwendung, bei der dies der Fall ist, besteht in der Anwendung der Vorrichtung als Pumpenleerlaufschutz. Hier ist der vorbestimmte Füllstand ein minimaler Füllstand, der in einem Behälter zum Schutz der Pumpe verbleiben muß. Der vorbestimmte Füllstand befindet sich somit typischerweise in der Nähe des Behälterbodens. Vorrichtungen zur Befestigung von Meßgeräten sind jedoch in der Regel am Behälterdeckel vorgesehen. Die Rohrverlängerung 9 ist z.B. mittels eines endseitig daran angeformten Außengewindes 11 zu befestigen. Andere Arten der Befestigung, z.B. mittels Flanschen, sind ebenfalls einsetzbar.

Als elektromechanische Wandler sind in einem Stapel 13 angeordnete piezoelektrische Elemente 15, 17 vorgesehen, die im Betrieb dazu dienen das mechanische Schwingungsgebilde in Schwingungen zu versetzten und dessen von einem momentanen Füllstand abhängige Schwingungen aufzunehmen und einer weiteren Verarbeitung und/oder Auswertung zugänglich zu machen.

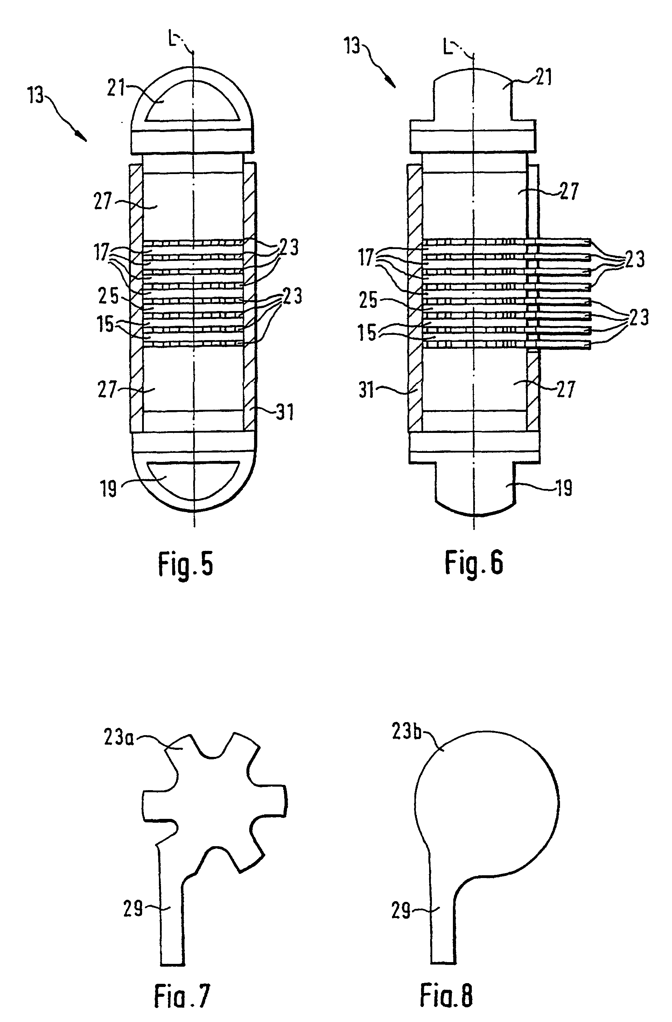

Die piezoelektrischen Elemente 15, 17 sind zwischen einem ersten und einem zweiten jeweils endseitig an den Stapel angrenzenden Stempel 19, 21 eingefaßt. Die Figuren 5 und 6 zeigen den Stapel 13 und den ersten und den zweiten Stempel 19, 21 im Detail. Der erste und der zweite Stempel 19, 21 bestehen vorzugsweise auf einem sehr harten Material, z.B. einem Metall.

Der Stapel 13 ist entlang einer Längsachse des Gehäuses 1 zwischen einer in das Gehäuses 1 eingeschraubten Druckschraube 24 und der Membran 3 eingespannt. Hierdurch ist die Membran 3 vorgespannt. Aufgrund der direkten Krafteinwirkung vom Stapel 13 auf die Membran 3 und der durch die Druckschraube 24 gewährleisteten starren Einspannung kann durch die Druckschraube 24 eine verhältnismäßig hohe Vorspannung der Membran 3 eingestellt werden. Diese bietet den Vorteil, daß die Vorrichtung auch bei hohen Temperaturen, z.B. deutlich oberhalb von 100°C, und bei hohen Drücken, z.B. deutlich oberhalb von 60 bar, einsetztbar ist, da Frequenz und/oder Amplitude der Schwingungen des mechanischen Schwingungsgebildes bei einer starken Vorspannung der Membran 3 weniger stark von einem auf das Schwingungsgebilde einwirkenden Druck und/oder durch Temperaturänderungen bedingten unterschiedlichen thermischen Ausdehnungen einzelner Elemente der Vorrichtung beeinflußt sind.

Mindestens ein piezoelektrisches Element 15 dient als Sender und mindestens ein piezoelektrisches Element 17 dient als Empfänger. Die Sender und die Empfänger weisen jeweils zwei Elektroden 23 auf. Diese sind auf einander gegenüberliegenden Flächen der piezoelektrischen Elemente 15, 17 angeordnet. Je eine Elektrode 23 jedes Senders ist mit einem Bezugspotential, z.B. Erde, verbunden ist. Die jeweilige andere Elektrode 23 der Sender ist jeweils mit einer Sendesignalleitung verbunden. Analog ist je eine Elektrode 23 jedes Empfänger mit einem Bezugspotential, z.B. Erde, verbunden. Die jeweilige andere Elektrode 23 der Empfänger ist jeweils mit einer Empfangssignalleitung verbunden. Der Empfänger dient dazu im Betrieb die mechanischen Schwingungen des Schwingungsgebildes aufzunehmen und in elektrische Signale umzuwandeln.

Alle piezoelektrischen Elemente 15, 17, also die Sender und die Empfänger sind jeweils parallel bzw. antiparallel zur Längsachse L des Stapels 13 polarisiert. Der Sender dient dazu im Betrieb das mechanische Schwingungsgebilde zu mechanischen Schwingungen anzuregen. Hierzu liegt am Sender im Betrieb ein elektrisches Sendesignal an, durch das der Sender und damit der Stapel 13 zu Dickenoszillationen angeregt wird.

Entsprechend führt eine Schwingung der Schwingstäbe 5 zu einer Biegeschwingung der Membran 3, die wiederum eine Dickenoszillation des Stapel 13 bewirkt. Diese Dickenoszillation führt zu einer Veränderung der über den Empfängern abfallenden Spannungen. Ein entsprechendes Empfangssignal steht über die jeweilige Empfangssignalleitung zur Verfügung.

Die Amplitude dieser Empfangssignale ist um so größer, je größer die mechanische Schwingungsamplitude des mechanischen Schwingungsgebildes ist. In Ausnutzung dieser Tatsache wird die Anordnung vorzugsweise bei deren Resonanzfrequenz fᵣ betrieben. Bei der Resonanzfrequenz fᵣ ist die mechanische Schwingungsamplitude maximal.

Damit das mechanische Schwingungsgebilde in Schwingungen bei dessen Resonanzfrequenz fᵣ versetzt wird, kann z.B. ein Regelkreis vorgesehen sein, der eine zwischen dem Sendesignal und dem Empfangssignal bestehende Phasendifferenz auf einen bestimmten konstanten Wert Δφ_{R} regelt, z.B. indem ein Empfangssignal über einen Phasenschieber und einen Verstärker auf das Sendesignal zurück gekoppelt wird. Ein solcher Regelkreis ist z. B. in der DE-A 44 19 617 beschrieben.

Die sich einstellende Resonanzfrequenz fᵣ und deren Amplitude hängen davon ab, ob das mechanische Schwingungsgebilde von dem Füllgut im Behälter bedeckt ist oder nicht. Entsprechend können eine oder auch beide Meßgrößen zur Feststellung und/oder zur Überwachung des vorbestimmten Füllstandes herangezogen werden.

Es kann z.B. das Empfangssignal einer Auswerteeinheit zugeführt sein, die mittels einer Frequenzmeßschaltung dessen Frequenz bestimmt und das Ergebnis einem Komparator zuführt. Dieser vergleicht die gemessene Frequenz mit einer in einem Speicher abgelegten Referenzfrequenz f_{R}. Ist die gemessene Frequenz kleiner als die Referenzfrequenz f_{R} gibt die Auswerteeinheit ein Ausgangssignal ab, das angibt, daß das mechanische Schwingungsgebilde von einem Füllgut bedeckt ist. Weist die Frequenz einen Wert auf der größer als die Referenzfrequenz f_{R} ist, so gibt die Auswerteeinheit ein Ausgangssignal ab, das angibt, daß das mechanische Schwingungsgebilde nicht vom Füllgut bedeckt ist.

Das Ausgangssignal ist z.B. eine Spannung, die einen entsprechenden Wert annimmt oder ein Strom, der einen entsprechenden Wert aufweist oder dem ein Signalstrom in Form von Pulsen mit einer entsprechenden Frequenz oder einer entsprechenden Dauer überlagert ist.

Eine Dickenoszillation eines Senders hat immer auch eine Querkontraktion des entsprechenden piezoelektrischen Elementes 17 zur Folge. Diese Querkontraktion hat nur eine geringe Auswirkung auf die Schwingung des mechanischen Schwingungsgebildes, sie kann jedoch aufgrund einer mechanischen Kopplung zwischen Sender und Empfänger zu einer Deformierung eines als Empfänger dienenden piezoelektrischen Elementes 15 führen. Eine solche Deformierung hätte eine vom Schwingungsverhalten des Schwingungsgebildes und damit auch vom Füllstand unabhängige Veränderung des Empfangssignals zur Folge und könnte somit zu Fehlmessungen führen.

Bei der erfindungsgemäßen Vorrichtung sind auf einer membran-zugewandten Seite zwei piezoelektrische Elmente 15 als Empfänger eingesetzt, die entweder gemeinsam, z.B. bei gleicher Polarisation der piezoelektrischen Elemente 15 in Form eines Summensignals der beiden Empangssignale, oder einzeln ausgewertet werden können. In membran-abgewandter Seite sind vier als Sender dienende piezoelektrische Elemente 17 elektrisch parallel und mechnisch in Reihe geschaltet. Zwischen den Sendern und den Empfängern ist zur mechanischen Entkopplung eine Trennscheibe 25 angeordnet. Die Trennscheibe 25 besteht z.B. aus Keramik und weist vorzugsweise eine den piezoelektrischen Elementen 15, 17 nachempfundene Form auf. Die Dicke der Trennscheibe 25 ist vorzugsweise in Abhängigkeit von der Größe einer ohne Trennscheibe 25 bestehenden mechanischen Kopplung zwischen Sender und Empfänger bestimmt.

In dem dargestellten Ausführungsbeispiel sind vier Sender und zwei Empfänger vorgesehen, um eine möglichst hohe Sendeleistung zu erzielen. Bei Anwendungen bei denen dies nicht erforderlich ist, kann z.B. auch ein symmetrisch aufgebauter Stapel, z.B. mit zwei benachbart zueinander angeordneten Sendern und zwei benachbart zueinander angeordneten Empfängern vorgesehen werden. Bei dieser Anordnung ist vorzugsweise zwischen den Sendern und den Empfängern eine Trennscheibe vorgesehen. Diese Anordnung der piezoelektrischen Elemente bietet den Vorteil, daß der Stapel symmetrisch ist, d.h. es muß beim Einbau nicht darauf geachtet werden, welches Ende des Stapels der Membran 3 zugewandt wird.

Alternativ kann auch eine sicherheitsgerichtete Anordnung der piezoelektrischen Elemente vorgenommen werden. So können z.B. zwei räumlich getrennt voneinander angeordnete, vorzugsweise separat elektrisch angeschlossene Sender vorgesehen sein. Diese Redundanz bietet denn Vorteil, daß auch dann, wenn ein Sender ausfällt noch eine Schwingungsanregung erfolgt. Analog sind bei einer solchen sicherheitsgerichteten Anordnung vorzugsweise zwei unabhängig von einander elektrisch angeschlossene Empfänger vorgesehen, deren Empfangssignale vorzugsweise getrennt ausgewertet werden. Auch hier bietet die dadurch gewonnene Redundanz eine erhöhte Sicherheit. Auch hier ist vorzugsweise überall dort wo ein Sender zu einem Empfänger benachbart ist zwischen dem Sender und dem Empfänger eine Trennscheibe vorgesehen.

Die piezoelektrischen Elemente 15, 17 sind unter Zwischenfügung der Elektroden 23 aufeinander gesetzt und an die jeweils endseitige äußere Elektrode 23 grenzt eine Isolierscheibe 27, z.B. aus Keramik, an.

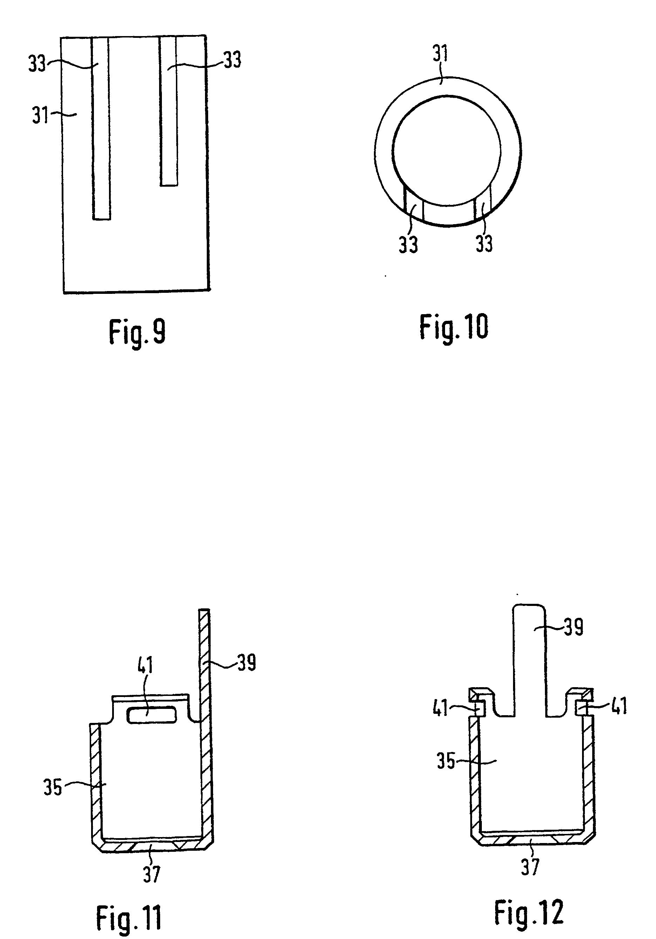

In Fig. 7 ist ein erstes Ausführungsbeispiel einer Elektrode 23a und Fig. 8 zeigt ein zweites Ausführungsbeispiel einer Elektrode 23b. Die Elektrode 23a weist sternförmig auslaufende Finger auf zwischen denen jeweils Freiräume bestehen. Diese Elektrodenform ist besonders dann bevorzugt einzusetzen, wenn die beiden daran angrenzenden Elemente mit der Elektrode 23a und miteinander verklebt werden sollen. Dies ist z.B. dann der Fall, wenn zwei benachbarte piezoelektrische Elemente 15, 17 über eine Elektrode 23a ansprechbar sind. Die Freiräume zwischen den Fingern nehmen beim Klebvorgang überflüssigen Klebstoff auf und verhindern ein Austreten des Klebstoffs aus dem Zwischenraum auf die Mantelflächen der mit der Elektrode verbundenen Bauteile. Klebstoff auf diesen Mantelflächen könnte zu parasitären elektrischen Verbindungen und damit zu fehlerhaften Signalen führen.

Die in Fig. 8 dargestellte Elektrode 23b nutzt dagegen die gesamte zur Verfügung stehende Oberfläche und bietet somit eine größere und gleichmäßigere Kontaktfläche.

Die Elektroden 23a, 23b weisen jeweils ein daran angeformtes Fähnchen 29 auf über das die Elektroden 23, 23a, 23b elektrisch anschließbar sind.

Die gestapelten piezoelektrischen Elemente 15, 17 und die endseitig daran angrenzenden Isolierkörper ist in einer, in den Figuren 9 und 10 im Detail dargestellten, Hülse 31 angeordnet. Die Hülse 31 ist zylindrisch und weist zwei Schlitze 33 auf, durch die die Fähnchen 29 hindurch geführt sind. Die Fähnchen 29 verlaufen parallel versetzt zu einer Diagonalen der Elektroden 23, 23a, 23b. Dies bietet den Vorteil, daß je nach dem welche Fläche der Elektrode 23, 23a, 23b der Membran 3 zugewandt ist, das Fähnchen 29 aus dem rechten oder dem linken Schlitz 33 heraus ragt. Es kann hierdurch eine Zuordnung der einzelnen Elektroden 23 zu einem Schlitz erfolgen. Damit können mehrere identisch anzuschließende Elektroden 23 leichter zusammengefaßt werden.

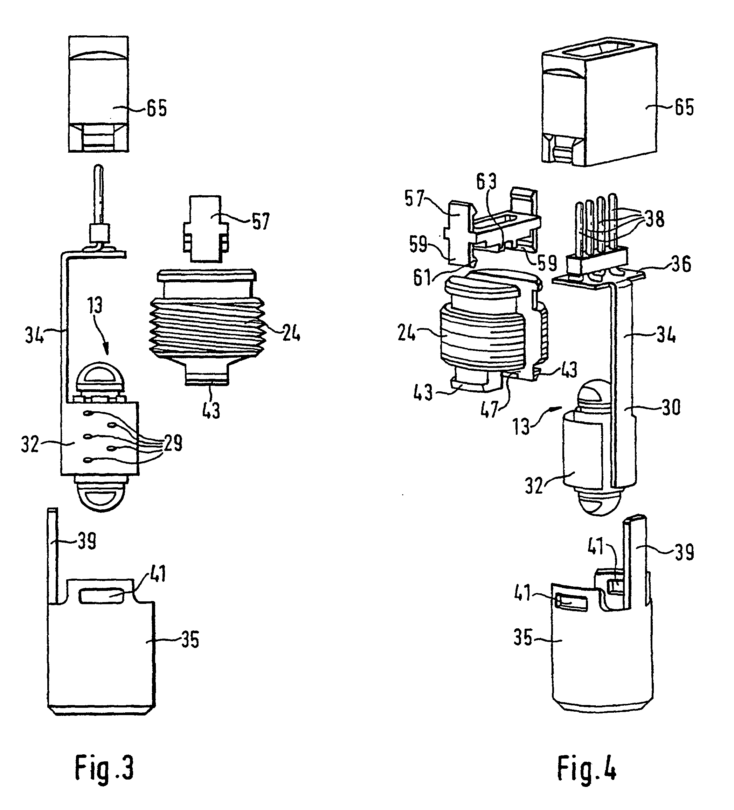

Die Fähnchen 29 sind an eine flexible Leiterplatte 30 angeschlossen, die einen rechteckigen Abschnitt 32 aufweist, der, wie in den Figuren 3 und 4 dargestellt, den Stapel 13 umgibt. An diesen Abschnitt schließt ein weiterer Abschnitt 34 an, der parallel zur Längsachse des Stapels 13 in membran-abgewandter Richtung verläuft. An diesen Abschnitt 34 ist endseitig ein Bereich 36 angeformt, auf dem die Anschlußleitungen der piezoelektrischen Elemente 15, 17 endseitig an Anschlußstifte 38 angeschlossen sind.

Die Hülse 31 ist endseitig von dem ersten und dem zweiten Stempel 19, 21 abgeschlossen. Die Stempel 19, 21 weisen einen zylindrischen Abschnitt auf, der in die Hülse 31 hinein ragt.

Der Stapel 13 ist in einem Einsatz 35 in dem Gehäuse 1 angeordnet. Der Einsatz 35 ist in den Figuren 11 und 12 im Detail dargestellt. Er ist im wesentlichen topfförmig und weist einen Boden auf, in dessen Mitte eine durchgehende Öffnung 37 vorgesehen ist. Die Form der Öffnung 37 ist der des Stempels 19 nachempfunden. In dem dargestellten Ausführungsbeispiel weist der Stempel 19 eine runde Kuppel mit einem rechteckigen Querschnitt auf. Entsprechend ist die Öffnung 37 ebenfalls rechteckig, so daß der Stempel 19 in seiner Lage relativ zum Einsatz 35 fixiert ist. Die Membran 3 weist vorzugsweise eine der Form des ersten Stempels 19 nachempfundene Mulde auf, in der die runde Kuppel des Stempels 19 drehbar gelagert ist. Diese Form der Lagerung bietet den Vorteil, daß aufgrund der runden Form der Kuppel und der Mulde eine Drehung ohne große Reibungsverluste und ohne auf den Stapel 13 einwirkende Torsionskräfte ohne weiteres möglich ist und trotzdem gleichzeitig aufgrund der großen Auflagefläche der Kuppel in der Mulde eine sehr gute mechanische Kraftübertragung vom Stapel 13 auf die Membran 3 gewährleistet ist.

Der Einsatz 35 weist einen in membran-abgewandter Richtung fortgeführten schmalen Wandabschnitt 39 auf, der als Schutzlehne für den Abschnitt 34 der flexiblen Leiterplatte 30 dient.

Die Druckschraube 24 ist mit dem Einsatz 35 mittels einem Schnappverschluß verbunden. Hierzu weist der Einsatz 35 zwei einander gegenüberliegend an dessen membran-abgewandten Ende angeordnete Ausnehmungen 41 auf, in die entsprechend geformte an einem membran-zugewandten Ende der Druckschraube 24 vorgesehene Rastnasen 43 einrasten. Der Schnappverschluß bietet den Vorteil, daß der Einsatz 35 und die Druckschraube 24 auf sehr einfache Weise fest mit einander verbunden sind.

Die Druckschraube 24 weist eine seitlich offene Ausnehmung 42 auf, durch die Anschlußleitungen der piezoelektrischen Elemente 15, 17 hindurch geführt sind. Die Anschlußleitungen verlaufen in der flexiblen Leiterplatte 30. Die seitliche Öffnung der Ausnehmung 42 ist durch den Wandabschnitt 39 abgedeckt.

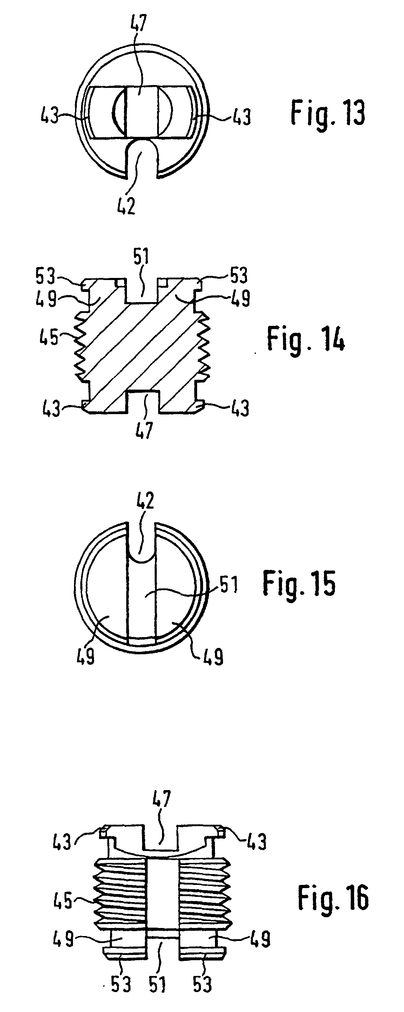

Die Druckschraube 24 ist in den Figuren 13 bis 16 im Detail dargestellt und deren Einbau ist aus den Figuren 3 und 4 ersichtlich. Sie weist im wesentlichen drei Abschnitte auf. Ein mittlerer Abschnitt ist im wesentlichen kreisscheibenförmig und weist ein Außengewinde 45 auf mit dem die Druckschraube 24 in das Gehäuse 1 eingeschraubt ist. An dem mittleren Abschnitt schließt ein membran-zugewandter Abschnitt an, der einen im wesentlichen rechteckigen Querschnitt aufweist und an dessen äußeren Enden die Rastnasen 43 angeformt sind. Dieser Abschnitt weist eine, in den Figuren 4, 13, 14 und 16 dargestellte, Ausnehmung 47 auf, in die der zweite Stempel 21 eingreift. Der Stempel 21 weist einen runde Kuppel mit einem rechteckigen Querschnitt auf. Entsprechend ist die Ausnehmung 47 ebenfalls rechteckig, so daß der Stempel 21 in seiner Lage relativ zur Druckschraube 24 fixiert ist.

Weiter weist die Druckschraube 24 einen membran-abgewandten Abschnitt auf, der zwei einander gegenüberliegende formgleiche Bereiche 49 mit kreissegmentförmigem Querschnitt aufweist, die durch eine Ausnehmung 51 voneinander getrennt sind. Durch die kreissegmentförmigen Querschnitte ist ein Kreis definiert, und die Ausnehmung 51 verläuft parallel zu einer Diagonalen dieses Kreises. An die beiden Bereiche 49 ist außen jeweils eine sich radial nach außen erstreckende umlaufende Schulter 53 angeformt.

Auf die Schultern 53 ist ein schmaler Träger 57 mit rechteckigem Querschnitt aufgeschnappt. Hierzu weist der Träger 57 zwei endseitig einander gegenüberliegend angeformte sich in membran-zugewandter Richtung erstreckende Abschnitte 59 auf, an die radial nach innen weisende Fortsätzen 61 angeformt sind. Die Fortsätze 61 greifen beim Aufschnappen hinter die Schultern 53 der Druckschraube 24. Zusätzlich weist der Träger 57 eine Führungsschiene 63 auf, die in die Ausnehmung 51 der Druckschraube 24 eingreift und eine Drehung des Trägers 57 relativ zu der Druckschraube 24 unterbindet.

Auf dem Träger 57 liegt der Bereich 36 der flexiblen Leiterplatte 30 auf, der die Anschlußstifte 38 aufweist. Auf den Träger 57 und die Anschlußstifte 38 ist ein Anschlußstecker 65 aufgerastet. Der Anschlußstecker 65 weist ebenfalls eine schmalen rechteckigen Querschnitt auf.

Bei der Montage der erfindungsgemäßen Vorrichtung wird zunächst der Stapel 13 gebildet und die piezoelektrischen Elemente 15, 17 werden über die Fähnchen 29 an die Anschlußleitungen in der flexiblen Leiterplatte 30 angeschlossen. Anschließend wird der Stapel 13 in den Einsatz 35 eingesetzt und die Druckschraube 24 wird aufgeschnappt. Auf der Druckschraube 24 wird der Träger 57 montiert und es wird der Steckverbinder 65 auf den Träger 57 und die Anschlußstifte 38 aufgesteckt.

Der Stapel 13, der Einsatz 35 und die Druckschraube 24 bilden somit eine Einheit. Dies bedeutet insb., daß die einzelnen Bauteile relativ zueinander nicht verdrehbar sind. Diese Einheit ist mittels eines an der Druckschraube 24 eingreifenden Werkzeuges in das Gehäuse 1 einschraubbar. So ist z.B. ein Werkzeug in Form einer zwei-zinkigen Gabel verwendbar, deren Zinken in die beidseits des Trägers 57 und des Steckverbinders 65 von einer membran-abgewandten Seite der Vorrichtung her frei zugänglichen Bereiche der Ausnehmung 51 eingreift.

Diese Einheit ist auch durch eine Rohrverlängerung 9 von beträchtlicher Länge, z.B. einigen Metern, hindurch montierbar. Das bietet den großen Vorteil, daß das mechanische Schwingungsgebilde mit der Rohrverlängerung 9 verbunden, z.B. verschweißt, werden kann, nachfolgend mit einer Beschichtung, z.B. einer Emaillierung oder einer Kunststoffbeschichtung, versehen werden kann und erst anschließend die Einheit eingesetzt wird. Dies bietet den Vorteil, daß auch bei Anwendungen, bei denen eine Rohrverlängerung erforderlich ist, solche Beschichtungen der Vorrichtung vorgenommen werden können, bei deren Aufbringung sehr hohe Temperaturen, z.B. mehrere 100 °C auftreten können, obwohl der elektromechanische Wandler und dessen Anschlußleitungen diesen Temperaturen nicht standhalten können.

## Patentansprüche

1. Vorrichtung zur Feststellung und/oder Überwachung eines vorbestimmten Füllstandes in einem Behälter, welche Vorrichtung ein auf der Höhe des vorbestimmten Füllstandes anzubringendes mechanisches Schwingungsgebilde mit einem topfförmigen endseitig von einer Membran (3) verschlossenen Gehäuse (1) sowie in einem Stapel (13) angeordnete piezoelektrische Elemente (15, 17) umfaßt, die im Betrieb dazu dienen, das mechanische Schwingungsgebilde in Schwingungen zu versetzten und dessen von einem momentanen Füllstand abhängige Schwingungen aufzunehmen und einer weiteren Verarbeitung und/oder Auswertung zugänglich zu machen, wobei der Stapel (13) im Gehäuses (1) mittels einer Druckschraube (24) gehalten wird,
**dadurch gekennzeichnet, daß** die piezoelektrische Elemente (15, 17) zwischen einem ersten und einem zweiten jeweils endseitig an den Stapel (13) angrenzenden Stempel (19, 21) eingefaßt sind und der Stapel (13) entlang einer Längsachse des Gehäuses (1) zwischen einer in das Gehäuse (1) eingeschraubten Druckschraube (24) und der Membran (3) eingespannt ist.

2. Vorrichtung zur Feststellung und/oder Überwachung eines vorbestimmten Füllstandes in einem Behälter, gemäß Anspruch 1, bei dem
- mindestens ein piezoelektrisches Element (17) als Sender dient, an den im Betrieb ein elektrisches Sendesignal angelegt ist und der das Schwingungsgebilde zu mechanische Schwingungen anregt, und
- mindestens ein piezoelektrisches Element (15) als Empfänger dient, der im Betrieb die mechanischen Schwingungen des Schwingungsgebildes aufnimmt und in elektrische Signale umwandelt.

3. Vorrichtung zur Feststellung und/oder Überwachung eines vorbestimmten Füllstandes in einem Behälter, gemäß Anspruch 2, bei dem zwischen dem Sender und dem Empfänger eine Trennscheibe (25) angeordnet ist.

4. Vorrichtung zur Feststellung und/oder Überwachung eines vorbestimmten Füllstandes in einem Behälter, gemäß Anspruch 1, bei dem die piezoelektrischen Elemente (15, 17) in einer Hülse (31) angeordnet sind, die endseitig von dem ersten und dem zweiten Stempel (19, 21) abgeschlossen ist.

5. Vorrichtung zur Feststellung und/oder Überwachung eines vorbestimmten Füllstandes in einem Behälter, gemäß Anspruch 1, bei dem der Stapel (13) in einem Einsatz (35) in dem Gehäuse (1) angeordnet ist.

6. Vorrichtung zur Feststellung und/oder Überwachung eines vorbestimmten Füllstandes in einem Behälter, gemäß Anspruch 5, bei dem die Druckschraube (24) mit dem Einsatz (35) mittels einem Schnappverschluß verbunden ist.

7. Vorrichtung zur Feststellung und/oder Überwachung eines vorbestimmten Füllstandes in einem Behälter, gemäß Anspruch 1, bei dem die Druckschraube (24) eine Ausnehmung (42) aufweist, durch die Anschlußleitungen der piezoelektrischen Elemente (15, 17) hindurch geführt sind.

8. Vorrichtung zur Feststellung und/oder Überwachung eines vorbestimmten Füllstandes in einem Behälter, gemäß Anspruch 1, bei dem Stapel (13), Einsatz (35) und Druckschraube (24) eine Einheit bilden, die mittels eines an der Druckschraube (24) eingreifenden Werkzeuges in das Gehäuse (1) einschraubbar ist.

9. Vorrichtung zur Feststellung und/oder Überwachung eines vorbestimmten Füllstandes in einem Behälter, gemäß Anspruch 1, bei dem die Membran (1) eine der Form des ersten Stempels (19) nachempfunden Mulde aufweist, in der der erste Stempel (19) drehbar gelagert ist.

## Claims

1. A device for determining and/or monitoring a predetermined filling level in a container, which device includes a mechanical oscillating structure, to be fitted at the height of the predetermined filling level, comprising a cup-shaped housing (1) closed on one side by a membrane (3) and piezoelectric elements (15, 17) arranged in a stack (13), which serve in operation to set the mechanical oscillating structure oscillating and to receive the oscillations thereof dependent on a filling level at the time and to make them accessible for further processing and/or evaluation, the stack (13) being held in the housing (1) by means of a pressure screw (24),
**characterised in that** the piezoelectric elements (15, 17) are enclosed between a first and a second piston (19, 21), each adjoining one end of the stack (13), and the stack (13) is clamped along a longitudinal axis of the housing (1) between a pressure screw (24) screwed into the housing (1) and the membrane (3).

2. A device for determining and/or monitoring a predetermined filling level in a container, according to Claim 1, in which
- at least one piezoelectric element (17) acts as transmitter, to which in operation an electrical transmission signal is applied and which induces the oscillating structure to perform mechanical oscillations, and
- at least one piezoelectric element (15) acts as receiver, which in operation receives the mechanical oscillations of the oscillating structure and converts them into electrical signals.

3. A device for determining and/or monitoring a predetermined filling level in a container, according to Claim 2, in which a separating plate (25) is arranged between the transmitter and the receiver.

4. A device for determining and/or monitoring a predetermined filling level in a container, according to Claim 1, in which the piezoelectric elements (15, 17) are arranged in a sleeve (31) which is closed off at the ends by the first and the second piston (19, 21).

5. A device for determining and/or monitoring a predetermined filling level in a container, according to Claim 1, in which the stack (13) is arranged in an insert (35) in the housing (1).

6. A device for determining and/or monitoring a predetermined filling level in a container, according to Claim 5, in which the pressure screw (24) is connected to the insert (35) by means of a spring catch.

7. A device for determining and/or monitoring a predetermined filling level in a container, according to Claim 1, in which the pressure screw (24) has a recess (42) through which connection lines of the piezoelectric elements (15, 17) are guided.

8. A device for determining and/or monitoring a predetermined filling level in a container, according to Claim 1, in which the stack (13), the insert (35) and the pressure screw (24) form a unit which may be screwed into the housing (1) by means of a tool acting on the pressure screw (24).

9. A device for determining and/or monitoring a predetermined filling level in a container, according to Claim 1, in which the membrane (1) [sic, recte (3)] has a depression adapted to the shape of the first piston (19), in which depression the first piston (19) is rotatably mounted.

## Revendications

1. Dispositif pour la détermination et/ou la surveillance d'un niveau de remplissage prédéterminé dans un récipient, lequel dispositif comprend une structure oscillante mécanique qui doit être installé à la hauteur du niveau de remplissage prédéterminé avec un boîtier (1 ) en forme de pot fermé du côté terminal par une membrane (3) ainsi que des éléments (15, 17) piézoélectriques disposés en une pile (13), qui, lors du fonctionnement, servent à mettre en oscillation la structure oscillante mécanique et pour recevoir les oscillations de la structure oscillante dépendant du niveau de remplissage momentané et rendre accessible un traitement ultérieur et/ou une évaluation ; la pile (13) étant maintenue dans le boîtier (1) au moyen d'une vis de pression (24),
**caractérisé en ce que** les éléments piézoélectriques (15, 17) sont insérés entre un premier et un deuxième tampon (19, 21) qui est contigu à chaque fois à la pile (13) et **en ce que** la pile (13) est serrée le long d'un axe longitudinal du boîtier (1) entre une vis de pression (24) et la membrane (3) vissés dans le boîtier (1).

2. Dispositif pour la fixation et/ou la surveillance d'un niveau de remplissage prédéterminé dans un récipient selon la revendication 1, dans lequel
- au moins un élément (17) piézoélectrique sert d'émetteur, auquel est appliqué un signal d'émission électrique qui provoque des oscillations mécaniques de la structure oscillante , et
- au moins un élément (15) piézoélectrique sert de récepteur qui reçoit lors du fonctionnement les oscillations mécaniques de la structure oscillante et les transforme en signaux électriques.

3. Dispositif pour la fixation et/ou la surveillance d'un niveau de remplissage prédéterminé dans un récipient selon la revendication 2, dans lequel on a disposé un disque de séparation (25) entre l'émetteur et le récepteur.

4. Dispositif pour la fixation et/ou la surveillance d'un niveau de remplissage prédéterminé selon la revendication 1 dans lequel les éléments (15, 17) piézoélectriques sont disposés dans une douille (31 ) qui est fermée par le premier et le deuxième tampon (19, 21).

5. Dispositif pour la fixation et/ou la surveillance d'un niveau de remplissage prédéterminé selon la revendication 1 dans lequel la pile (13) est disposée dans un insert (35) dans un boîtier (1).

6. Dispositif pour la fixation et/ou la surveillance d'un niveau de remplissage prédéterminé selon la revendication 5 dans lequel la vis de pression (24) est reliée avec l'insert (35) au moyen d'une fermeture à encliquetage.

7. Dispositif pour la fixation et/ou la surveillance d'un niveau de remplissage prédéterminé selon la revendication 1, dans lequel la vis de pression (24) présente un évidement (42) à travers lequel on conduit des conduites de raccordements des éléments piézoélectriques (15, 17).

8. Dispositif pour la fixation et/ou la surveillance d'un niveau de remplissage prédéterminé selon la revendication 1, dans lequel la pile (13), l'insert (35) et la vis de pression (24) forment une unité qui est susceptible d'être vissée dans le boîtier au moyen d'un outil s'engrenant dans la vis de pression (24).

9. Dispositif pour la fixation et/ou la surveillance d'un niveau de remplissage prédéterminé selon la revendication 1, dans lequel la membrane (1) présente un creux s'adaptant selon la forme du premier tampon (19) dans lequel creux le premier tampon (19) est logé de façon rotative.
